# EUROPEAN PATENT SPECIFICATION

(11) **EP 0 752 707 B1**
(45) Date of publication and mention of the grant of the patent: **01.12.1999**
(21) Application number: 95927983.7
(22) Date of filing: 07.08.1995
(51) Int. Cl.: G21F 9/30, G21C 19/36

(54) **METHOD AND APPARATUS FOR REDUCING VOLUME OF RADIOACTIVE METAL WASTE CONTAINING ZIRCONIUM ALLOY**
VERFAHREN UND VORRICHTUNG ZUR VERMINDERUNG DES VOLUMENS UND RADIOAKTIVEM METALLABFALL EINE ZIRKONIUMLEGIERUNG ENTHALTEND
PROCEDE ET DISPOSITIF SERVANT A REDUIRE LE VOLUME DE DECHETS DE METAUX RADIOACTIFS CONTENANT UN ALLIAGE DE ZIRCONIUM

(30) Priority: 08.08.1994 JP 18568094
(43) Date of publication of application: 08.01.1997
(73) Proprietor: KABUSHIKI KAISHA KOBE SEIKO SHO, Kobe-shi Hyogo-ken 651 (JP)
(72) Inventor: KOMATSU, Yukihiko Kobe Honsha, K.K.Kobe Seiko Sho, Kobe-shi, Hyogo-ken 651 (JP); WADA, Ryutaro Kobe Honsha, K.K.Kobe Seiko Sho, Kobe-shi, Hyogo-ken 651 (JP)
(74) Representative: Keib, Gérard
(86) International application number: JP9501567
(87) International publication number: WO9605599

(56) References cited:
- JP-A- 1 270 700
- JP-A- 59 222 799
- JP-A- 61 213 699

## Description

### BACKGROUND ART

This invention relates to a method and apparatus for compacting radioactive metal waste containing zirconium alloys, e.g., fuel cladding made of zircaloy, and other used metal materials which come about in reprocessing spent nuclear fuel for light water nuclear reactors.

Zircaloy is an alloy mainly composed of zirconium. Having a smaller thermal cross section, zircaloy is much used as material for nuclear reactor. In particular, zircaloy is preferably used as material for fuel claddings for use in a reactor. For example, in reprocessing fuel for light water reactor which is filled in a cladding made of zircaloy, a fuel bundle of fuel rods is dissembled to individual fuel rods. Thereafter, each fuel rod is sheared into pieces of several centimeters. The thus obtained pieces are placed in a solution bath to separate into nuclear fuel materials, sheared pieces of cladding (hereinafter referred to as "zircaloy hull"), and the remaining parts (hereinafter referred to as "hardware").

The separated nuclear fuel materials are transported to a processing section for reuse. Radioactive metal wastes, i.e., zircaloy hull and hardware, are sealingly contained in a container made of stainless steel as they are and stored then in a storage facility. The container is called a «hull-can». However, the number of hull-cans containing zircaloy hull and other wastes is getting increased each time spent nuclear fuel is reprocessed, which causes the problem that the storage facility is occupied with hull-cans in a short period. To solve this problem, there has been proposed a technology of compacting radioactive metal waste such as zircaloy hull, thereby saving the space for the storage facility.

JP-A-61 213 699 relates to a technology aiming at efficiently storing compacted drum can containing radioactive waste in terms of size and shape but does not tackle the problem of security while compacting the can.

JP-A-59 222 799 relates to a technology enabling the compacting of a drum can containing radioactive waste by first drilling a hole in the container to discharge unnecessary fluid and gas from the container and then by pressing from horizontal and vertical directions.

JP-A-1 270 700 relates to a compacting apparatus for a radioactive solid waste. The apparatus includes a projecting pipe at a leading end of a pressing ram to make a hole in an upper surface of a container set in a die assembly to release a gas in the container at the time of being pressed in order to prevent a pressure rise in the container when the container is being pressed.

However, no measure is provided to control the waste contained in the container, so that, if the contained waste is zircaloy-hull-cut pieces of the size of 2,54 cm (1 inch) or 5,08 cm (2 inches), there is a fair chance that the zircaloy-fine reacting with remaining air or discharged air may cause explosion, resulting in a hazardous situation.

As a matter-of-fact, in compressing or compacting radioactive metal waste, a large amount of fine dusts of zircaloy, i.e. an alloy of zirconium, comes about. Since these fine dusts have a very high flammability, it is necessary to keep the air from flowing into a compacting chamber.

Beside such steps aiming at allowing gas to escape from the container while being compacted, there have been proposed many ways of shutting off the air, for example, of compressingly compacting radioactive metal waste in inert gas or in water. In the former way of carrying out compaction in inert gas, the prevention of burning is ensured because of no oxygen. However, a very large amount of inert gas is required to remove the whole air from a room accomodating a compacting apparatus.

The latter way of carrying out compaction in water can effectively prevent burning. However, water is liable to be sealed in a compressed lump of waste. It is very difficult to completely remove water from the lump. Accordingly, the compressed waste lump is stored in the state that water remains in the lump. In a long storage, the water contained in the lump is subjected to radiation, and hydrogen gas occurs.

Recently, a so-called « capsule pressing » method has been attracting attention in which zircalloy hull and hardware are contained in a capsule made of stainless steel, the air is drawn out from the capsule to produce a substantial vacuum in the capsule, the capsule airtightly containing zircaloy hull and hardware is mechanically pressed (uniaxial compression) in a closed chamber to compress the capsule into a pellet, and a number of pellets are acomodated in an accomodation unit called « canister » and stored in a storage facility. The capsule pressing method is advantageous in effectively preventing fly of fine dusts of zircaloy in the air because zircaloy hull and hardware are compressed in the sealed state. As long as the vacuum is maintained in the capsule, accordingly, no burning occurs.

However, in the above-mentioned capsule pressing method, there is a likelihood that a crack occurs in the capsule during the pressing, which results in leakage of fine dusts of zircaloy hull from the capsule to the air.

This invention has been worked out to solve the above-mentioned problems, and has an object to provide a method and apparatus for compacting radioactive metal waste containing a zirconium alloy which can reliably prevent burning of fine dusts of zircaloy regardless of the sealability of the capsule.

### DISCLOSURE OF THE INVENTION

To solve the above problems, this invention has adopted the following construction.

As an aspect of the invention, a method for compacting radioactive metal waste including a zirconium alloy, comprises the steps of: placing radioactive metal waste containing a zirconium alloy in a capsule, transporting the capsule containing the waste in a tightly closeable processing chamber; removing oxygen from the processing chamber and the capsule after tightly closing said processing chamber in which said capsule is placed; compressing and compacting the capsule in the processing chamber containing no oxygen ; and transporting out the compacted capsule from the processing chamber.

In this method, oxygen indispensable for fire is removed from the processing chamber in which the capsule containing the radioactive metal waste including zirconium alloy has been transported. Accordingly, fire can be securely prevented even in the case that fine dusts having flammability are brought about from the crashed raioactive metal waster containing zirconium alloy when the capsule is compressed and compacted.

Also, in the oxygen removing step, oxygen may be removed by drawing the air containing oxygen from the processing chamber and the capsule. The processing chamber is put in a vacuum state having no oxygen. Accordingly, fire can be securely prevented even in the case that fine dusts having flammability are brought about from the crashed radioactive metal waste containing zirconium alloy when the capsule is compressed and compacted.

Further, in the oxygen removing step, it may be appreciated to remove the air containing oxygen from the processing chamber and the capsule and supply inert gas to the processing chamber. The processing chamber accommodating the capsule is supplied with the inert gas after being put into the vacuum state. Accordingly, because the processing chamber is filled with the inert gas, fire can be securely prevented even in the case that fine dusts having flammability are brought about from the crashed radioactive metal waste containing zirconium alloy when the capsule is compressed and compacted.

Furthermore, in the oxygen removing step, inert gas may be supplied to the processing chamber while the air containing oxygen is being removed from the processing chamber and the capsule. Inert gas is supplied to the processing chamber during the time when the air is drawn from the processing chamber. Accordingly, because the processing chamber is filled with the inert gas, fire can be securely prevented even in the case that fine dusts having flammability are brought about from the crashed radioactive metal waste containing zirconium alloy when the capsule is compressed and compacted.

As another aspect of the invention, an apparatus for compacting radioactive metal waste including a zirconium alloy, the radioactive metal waste being contained in a capsule, the apparatus comprising a processing chamber for accommodating the capsule containing the radioactive metal waste; an oxygen remover for removing oxygen from the processing chamber and the capsule, and a compressor for compressing the capsule accommodated in the processing chamber.

In this apparatus, the capsule containing radioactive metal waste including zirconium alloy is placed in the processing chamber. Thereafter, the oxygen remover removes oxygen from the processing chamber and the compressor compresses and compacts the capsule in the processing chamber. Accordingly, even in the case that fine dusts having flammability are brought about from the crashed radioactive metal waste containing zirconium alloy when the capsule is compressed and compacted, fire of fine dusts can be securely prevented because of the absence of oxygen.

Also, the processing chamber may be defined by a base table on which the capsule is placed and an enclosing member vertically movable with respect to the base table. The oxygen remover may be provided with a vacuum pump connected with the processing chamber. The compressor may be provided with a presser member movable in the processing chamber to come into contact with the capsule. The capsule containing the radioactive metal waste is placed on the base table. The enclosing member is moved down to define the processing chamber. The capsule is sealingly accommodated in the processing chamber. The vacuum pump is driven to put the processing chamber into a vacuum state.

The capsule is compressed and compacted by moving down the presser member in the vacuum state. Accordingly, even in the case that fine dusts having flammability are brought about from the crashed radioactive metal waste containing zirconium alloy in this time, fire of fine dusts can be securely prevented because of the absence of oxygen.

Further, the enclosing member may be provided with a vertical enclosing wall for enclosing the capsule. The periphery of the capsule is enclosed by the vertical enclosing wall when being enclosed by the enclosing member. Accordingly, the capsule is compressed without sidewise deformations by the presser member. This will increase the compacting rate.

Moreover, there may be further provided an inert gas supplier for supplying inert gas into the processing chamber. This makes it possible to supply inert gas into the processing chamber after the air is drawn from the processing chamber by the vacuum pump, or alternatively to supply inert gas into the processing chamber while drawing the air from the processing chamber. Accordingly, even in the case that fine dusts having flammability are brought about from the crashed radioactive metal waste containing zirconium alloy when the capsule is compressed and compacted, fire of fine dusts can be securely prevented because the processing chamber is filled with the inert gas instead of oxygen.

### BRIEF DESCRIPTION OF THE DRAWINGS

FIG. 1 is a vertical sectional view of a compacting apparatus embodying the invention;
FIG. 2 is a plan view of the compacting apparatus of FIG. 1;
FIG. 3 is a side view of a bundle of spent fuel rods for a light water reactor which is to be processed with the use of the compacting apparatus;
FIG. 4 is a perspective view of a capsule for containing zircaloy hull and others;
FIGs. 5(a) and 5(b) are diagrams showing a step of transporting the capsule in the compacting apparatus, FIG. 5(a) showing a state that the capsule is being transported by a truck to the compacting apparatus, FIG. 5(b) showing a state that the capsule on the truck is being enclosed by an enclosing member;
FIGs. 6(a) and 6(b) are diagrams showing a step of drawing the air from a processing chamber enclosing the capsule to produce a substantial vacuum in the processing chamber, FIG. 6(a) showing a state that the truck is retracted and the capsule is placed on a bottom member, FIG. 6(b) showing a state that the air is being drawn from the processing chamber;
FIGs. 7(a) and 7(b) are diagrams showing a step of compressing and compacting the capsule by reducing the substantially vacuumed processing chamber, FIG. 7(a) showing a state that the capsule is compressed and compacted by lowering a pressing rod, FIG. 7(b) showing a state that the enclosing member is being lifted, the compacted capsule being held on the enclosing member; and
FIGs. 8(a) and 8(b) are diagrams showing a step of transporting the compacted capsule from the compacting apparatus, FIG. 8(a) showing a state that the compacted capsule is loaded on the truck positioned on the bottom member, FIG. 8(b) showing a state that the compacted capsule is being transported by the truck from the compacting apparatus.

### BEST MODE FOR CARRYING OUT THE INVENTION

It should be noted that a compacting apparatus according to this invention adapts the so-called "capsule pressing" method in which zircaloy hull and hardware are filled in a cylindrical container made of metal, and the container (hereinafter referred to as "capsule") is compressed by a press to compact the capsule.

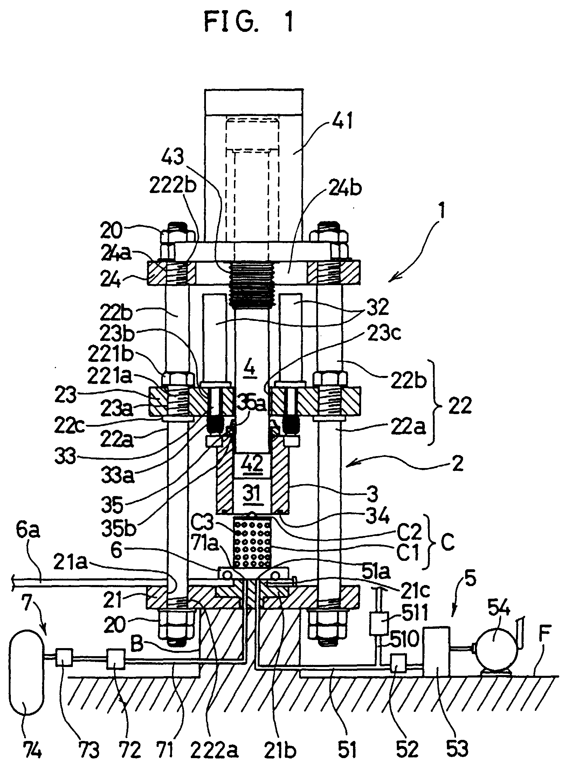

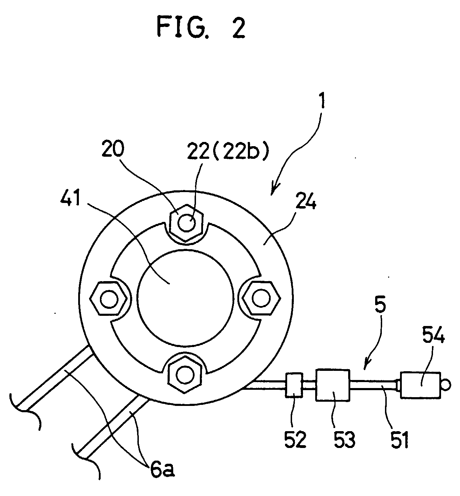

FIG. 1 is a vertical sectional view embodying a compacting apparatus of this invention, and FIG. 2 is a plan view of the compacting apparatus of FIG. 1. As shown in these drawings, the compacting apparatus 1 is installed on a base block B provided on a floor F. The compacting apparatus 1 comprises a support frame 2 including a base table 21 at a bottom thereof, an enclosing member 3 elevatably supported on the support frame 2 for defining a processing chamber 31 extending in a vertical direction, a pressing rod 4 slidable along an inner wall of the enclosing member 3, a cylinder 41 supported on the support frame 2 for moving the pressing rod up and down. an air drawer 5 for drawing the air from the processing chamber 31 enclosed by the enclosing member 3 made in contact with atop surface of the base table 21, and a truck 6 for transporting a capsule C filled with zircaloy hull and hardware to a specified position on the base table 21 and below the enclosing member 3.

As shown in FIG. 1, further, the apparatus 1 includes an inert gas supplier 7 for supplying inert gas into the processing chamber 31 enclosed by the enclosing member 3 made in contact with the top surface of the base table 21.

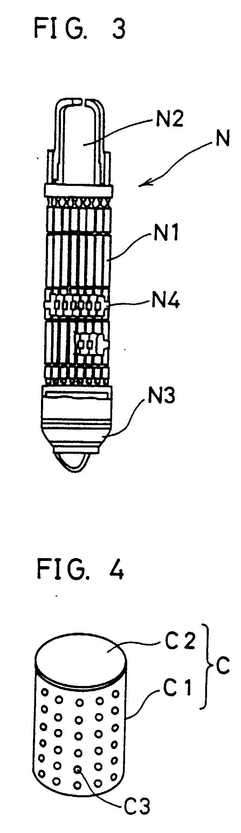

FIG. 3 is a side view showing a bundle N of spent fuel rods for a light water nuclear reactor. The bundle N is to be processed by the compacting apparatus. As shown in the drawing, the bundle N comprises a number of claddings N1 made of zircaloy each sealingly containing nuclear fuel, an upper nozzle portion N2 provided on atop of the bundled claddings N1, a lower nozzle portion N3 provided on a bottom of the bundled claddings N1, and a number of support members N4 for supporting the claddings N1 in the bundle state.

In processing the spent fuel for reuse, the spent fuel rod bundle N is dissembled and cut into pieces of several centimeters. The cut pieces are thrown into a solution bath containing a specified solution where the pieces are separated to nuclear fuel material, zircaloy hull or pieces ofthe claddings N1 and nozzle portions N2 and N3. The thus separated nuclear fuel material is transported to a processing for reuse. The remaining zircaloy hull and other wastes are compacted by the compacting apparatus 1, and stored in a storage facility.

FIG. 4 is a perspective view showing a capsule C for containing the zircaloy hull and other wastes. As shown in the drawing, the capsule C includes a capsule main body C1 in the form of a cylinder and having a bottom, and a cover member C2 for closing a top opening ofthe capsule main body C1. The capsule main body C1 is formed with a multitude of holes C3 in a periphery thereof to allow the air to escape from the inside of the capsule C through the holes C3. The capsule main body C1 is filled with zircaloy hull and then closed with the cover member C2, that is, waste-filling-step. In the state that the capsule C is closed by the cover member C2, the capsule is compacted by the compacting apparatus 1.

The above capsule C is formed with the multitude of air-passing holes C3 in the capsule main body C1. However, this invention is not limited for capsules C having air-passing holes but may be applicable for capsules having no air-passing holes. In the case of no air-passing holes, it is preferable to produce a vacuum in the capsule prior to compacting the capsule by the compacting apparatus 1.

Referring back to FIG. 1, as mentioned above, the support frame 2 is provided with the base table 21 fixedly secured to the base block B, four upright pillars 22 arranged at equidistance along a circumference of the base table 21, an intermediate table 23 supported on the pillars 22 at a substantially intermediate portion over the length of the pillar 22, and a top table 24 supported on a top portion of the pillars 22. The base table 21, intermediate table 23, and top table 24 each have a round shape when viewed from above.

The base table 21 (intermediate table 23, top table 24) is formed with four through holes 21a (23a, 24a) arranged at equidistance along its circumference. The four holes 21a are opposed to the corresponding four holes 23a (24a) in the vertical direction. The base table 21, intermediate table 23 and top table 24 are connected to one another by the four pillars 22 passing through the holes 21a, 23a, and 24a.

The pillar 22 includes a lower support portion 22a below the intermediate table 23 and an upper support portion 22b above the intermediate table 23. The lower and upper support portions 22a and 22b join each other at the intermediate table 23. The lower support portion 22a has an upper thread portion 221a and a lower thread portion 222a. A flange 22c is provided at a lower end of the upper thread portion 221a. The flange 22c has an outer diameter larger than the inner diameter of the through hole 23a. An upper end of the upper thread portion 221a extends beyond the intermediate table 23.

A nut 221b is fitted on the upper end of the upper thread portion 221a. The upper support portion 22b is formed with a thread portion 222b at an upper end thereof. The thread portion 222b passes through the through hole 24a and an upper end of the thread portion 222b projects from the top table 24.

A nut 20 is fitted on the lower thread portion 222a of the lower support portion 22a with the lower thread portion 222a passing through the through holes 21a of the base table 21. The upper thread portion 221a of the lower support portion 22a is passed through the hole 23a of the intermediate table 23 and is fitted with the nut 221b. Further, the thread portion 222b is passed through the hole 24a of the top table 24 and is fitted with the nut 20. In this way, the support frame 2 is installed on the base block B.

The base table 21 is provided with a bottom member 21b at a center thereof. The bottom member 21b is formed with a rise portion 21c at a center thereof. Further, a pair of rails 6a are arranged to guide the truck 6 to the bottom member 21b. The truck 6 loaded with the capsule C is guided along the rails 6a to and away from the bottom member 21b. The rails 6a are disposed apart from each other at a distance larger than the outer diameter of the enclosing member 3 to prevent the enclosing member 3 from hitting the rails 6a when the enclosing member 3 is lowered to the base table 21.

The intermediate table 23 is provided with at least two lifting cylinders 32 for lifting up and down the enclosing member 3. The lifting cylinders 32 each have a cylinder rod 33. The cylinder rod 33 is extendible from the intermediate table 23 along a vertical rod hollow 23b formed vertically in the intermediate table 23. The cylinder rods 33 are coupled to an upper portion of the enclosing member 3. With this arrangement, the cylinder rods 33 are extended from and contracted to the intermediate table 23 as the lifting cylinders 32 are driven, and the enclosing member is thereby moved up and down.

The cylinder rod 33 is extended in such a distance that the enclosing member 3 moves from a stand-by position which is above the bottom member 21b to a contact position where the bottom surface ofthe enclosing member 3 comes into contact with the bottom member 21b. Also, the cylinder rod 33 is provided with a flexible tube 33a in a lower portion projecting from the intermediate table 23 As the cylinder rods 33 are extended or contracted, the flexible tubes 33a are expanded or contracted. The flexible tubes 33a serve to cover the cylinder rods 33.

The vertical hollow of the enclosing member 3 is formed with a smooth surface. The pressing rod 4 is attached with a head 42 at a lower end thereof. The pressing head 42 is slidably moved along the inner surface of the vertical hollow. The pressing head 42 and the inner surface of the enclosing member 3 defines the processing chamber 31. The enclosing member 3 is moved down while the truck 6 is retracted from the bottom member 21b until the bottom surface of the enclosing member 3 comes into contact with the bottom member 21b. In this time, a lower inner surface of the enclosing member 3 comes into tight contact with an outer surface of the rise portion 21c to effectively retain the airtightness of the processing chamber 31.

To increase the airtightness of the processing chamber 31, the enclosing member 3 is provided with an annular seal member 34 in the bottom surface thereof. The seal member 34 comes into airtight contact with the top surface of the bottom member 21b when the enclosing member 3 is lowered to the contact position.

The enclosing member 3 is attached with a ring member 35 on a top surface thereof. Also, a flexible cover 35a is attached on the ring member 35 on a top surface of the ring member 35. The flexible cover 35a is made in sliding contact with the periphery of the pressing rod 4.

Further, an annular seal member 35b is placed between the bottom surface of the ring member 35 and the top surface of the enclosing member 3 to ensure the airtightness of the processing chamber 31 at the upper portion. In this embodiment, the seal members 34 and 35b are respectively an O-ring made of rubber. However, it may be appreciated to use O-rings made of metal or a combination of an O-ring made of metal and an O-ring made of rubber.

The pressing rod 4 extends downward from a pressing cylinder 41 fixedly secured to an upper surface of the top table 24, and passes through a hole 24b of the top table 24 and a hole 23c of the intermediate table 23. The pressing head 42 of the pressing rod 4 is slidably placed in the enclosing member 3. Accordingly, the space of the processing chamber 31 is changed by driving the pressing cylinder 41 to move up and down the pressing rod 4, i.e., the pressing head 42.

The pressing cylinder 41 is arranged with a bellows tube 43 on a lower portion thereof to enclose the pressing rod 4 partially. The bellows tube 43 is expandable and contractible in accordance with the downward and upward movement of the pressing rod 4. This serves to keep dusts from intruding in the pressing cylinder 41. It may be appreciated to attach a sealing ring or a plurality of sealing rings on the pressing rod 4, and ensure the vacuum state with the use of the so-called dynamic sealing method.

The processing chamber 31 has a maximum volume slightly larger than a volume of the uncompressed capsule C. Accordingly, when the enclosing member 3 is moved down to enclose the capsule C which has been placed at the specified position on the bottom member 21b, the capsule C is completely accommodated inside the processing chamber 31. In this state, the inner surface of the lower end portion of the enclosing member 3 comes into contact with the periphery surface of the rise portion 21c, and the end surface of the enclosing member 3 comes into contact with the top surface of the bottom member 21b.

The air drawer 5 includes an air drawing pipe 51 having an opening 51a in the rise portion 21c, a stop valve 52 and an air filter 53 both of which are provided on the way along the air drawing pipe 51, a branch pipe 510 between the opening 51a and the stop valve 52, and a vacuum pump 54 connected to the air drawing pipe 51 downstream of the air filter 53. The branch pipe 510 is provided with a stop valve 511.

In the drawing, the opening 51a is formed in the top surface of the rise portion 21c. However, it may be preferable to form the opening 51a in the periphery surface of the rise portion 21c to eliminate the likelihood that the opening 51a is closed by the capsule C and ensure a reliable air drawing.

Accordingly, when the enclosing member 3 is placed on the bottom member 21b, the stop valve 511 is closed and the stop valve 52 is opened and the vacuum pump 54 is driven to draw the air from the processing chamber 31 through the opening 51a and the air drawing pipe 51. After cleaned by the air filter 53, the air is discharged to the outside through the vacuum pump 54.
Consequently, the processing chamber 31 is put in a vacuum state.

The inert gas supplier 7 includes a gas supply pipe 71 having an opening 71a in the rise portion 21c, a stop valve 72 arranged on the way of the gas supply pipe 71, a pressure regulating valve 73 arranged upstream of the stop valve 72, and an inert gas reservoir 74 arranged upstream of the pressure regulating valve 73. The pressure regulating valve 73 regulates the pressure of the inert gas supplied from the gas reservoir 74 to a desired level.

In the drawing, the opening 71a is formed in the top surface of the rise portion 21c. However, it may be preferable to form the opening 71a in the periphery surface of the rise portion 21c to eliminate the likelihood that the opening 71a is closed by the capsule C and ensure a reliable air drawing.

Accordingly, when the enclosing member 3 is placed on the bottom member 21b and the processing chamber 31 is put in the vacuum state, the stop valve 52 is closed and the stop valve 72 is opened to flow inert gas into the processing chamber 31 from the gas reservoir 74 through the gas supply pipe 71 and the opening 71a. The pressure of the inert gas is regulated by the pressure regulating valve 73. In this state, the stop valve 511 is opened, oxygen yet remaining in the processing chamber 31 is discharged through the stop valve 511. Consequently, the processing chamber 31 is filled with the inert gas. During the driving of the vacuum pump 54 in the state of the stop valve 511 being closed, also, the stop valve 72 may be opened to replace the air in the processing chamber 31 with inert gas.

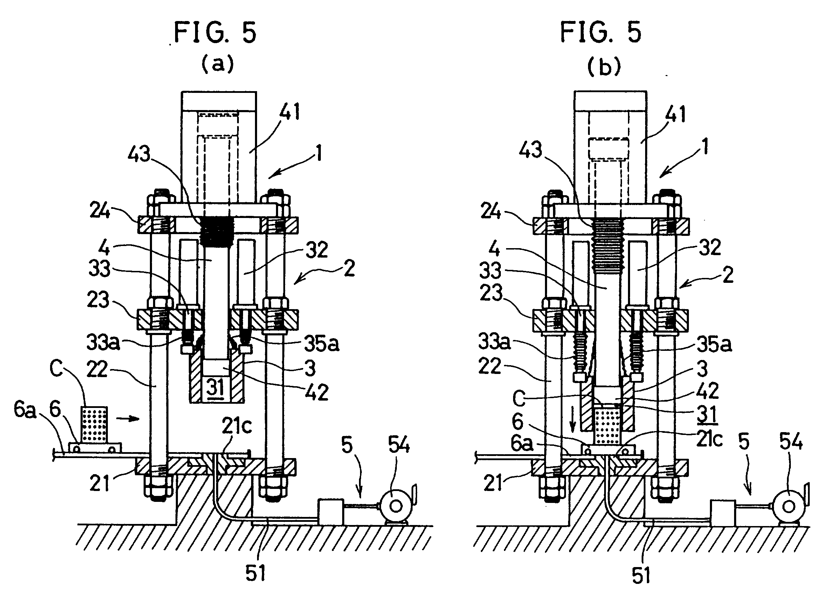

An inventive method of compacting radioactive metal waste with the use of the above-described compacting apparatus will be described with reference to FIGs. 5 to 8. The compacting method will be described using no inert gas. Accordingly, the inert gas supplier is not shown in FIGs. 5 to 8.

FIGs. 5(a) and 5(b) are diagrams showing a step of transporting the capsule C. Specifically, FIG. 5(a) shows a state that the capsule C is being transported in the compacting apparatus by the truck 6, and FIG. 5(b) shows a state that the capsule on the truck is being enclosed by the enclosing member.

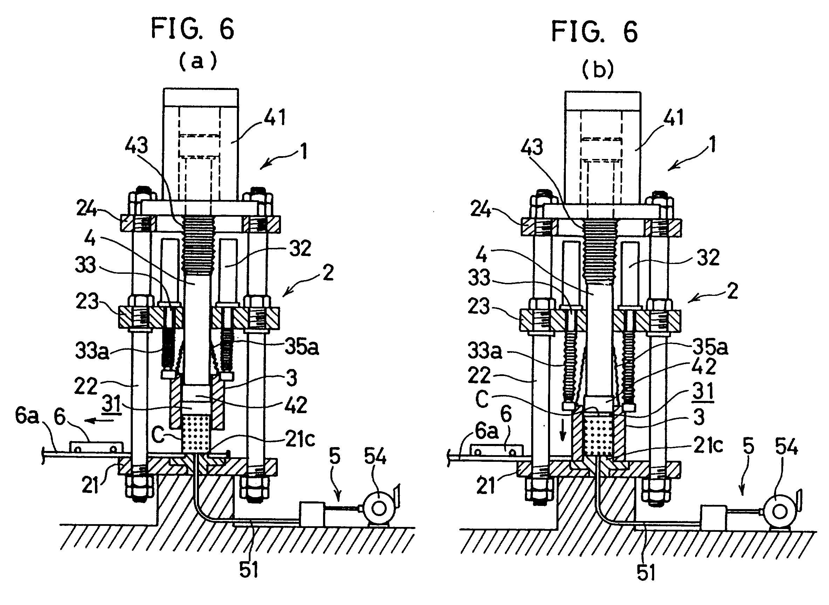

FIGs. 6(a) and 6(b) are diagrams showing a step of drawing the air from the processing chamber enclosing the capsule to produce a substantial vacuum in the processing chamber, FIG. 6(a) showing a state that the truck is retracted and the capsule is placed on a bottom member, FIG. 6(b) showing a state that the air is being drawn from the processing chamber;

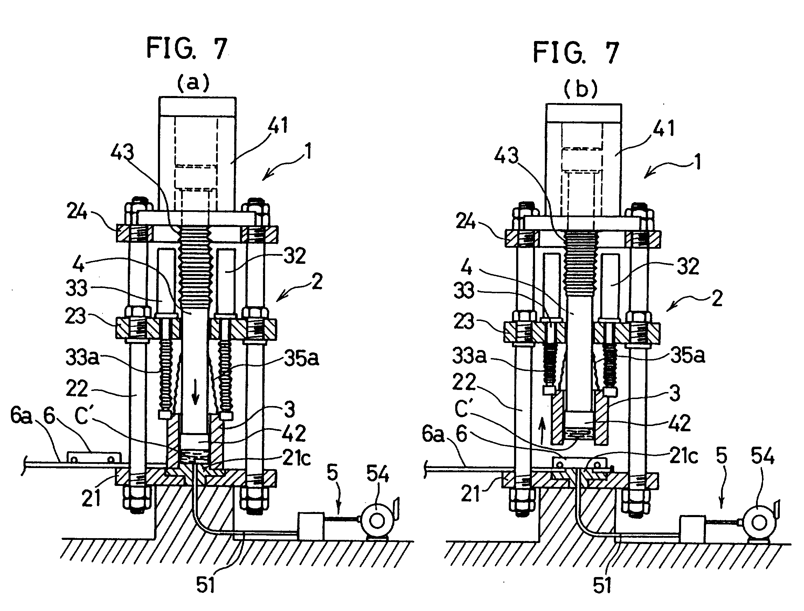

FIGs. 7(a) and 7(b) are diagrams showing a step of compressing and compacting the capsule by reducing the substantially vacuumed processing chamber, FIG. 7(a) showing a state that the capsule C is compressed and compacted by lowering the pressing rod 4, FIG. 7(b) showing a state that the enclosing member is being lifted, the compacted capsule C' being held on the enclosing member 3; and

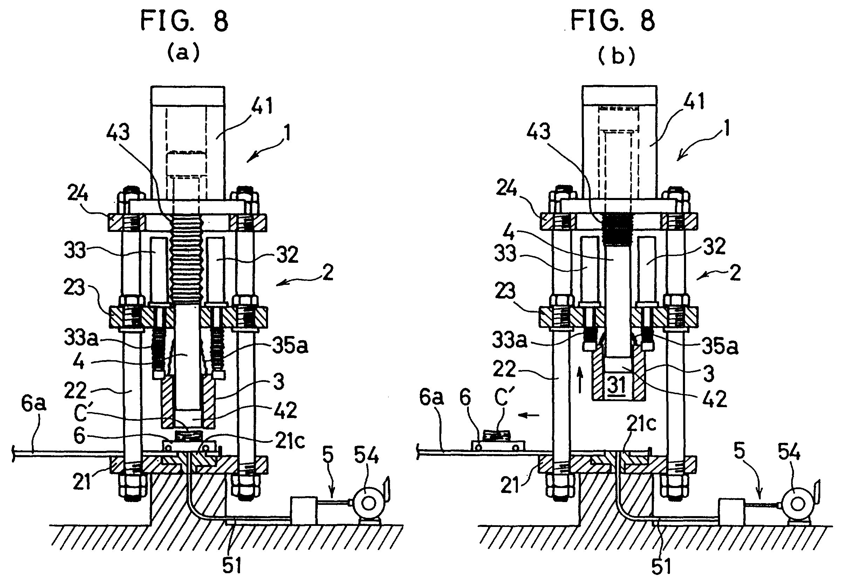

FIGs. 8(a) and 8(b) are diagrams showing a step of transporting the compacted capsule C' from the compacting apparatus, FIG. 8(a) showing a state that the compacted capsule is loaded on the truck positioned on the bottom member 21b, FIG. 8(b) showing a state that the compacted capsule C' is being transported by the truck 6 from the compacting apparatus 1.

In the transporting step, the truck 6 loaded with the capsule C is moved along the rails 6a to the compacting apparatus 1 as shown in FIG. 5(a). Subsequently, the capsule C is transported to the position corresponding to the rise portion 21c in the center of the base table 21, i.e., the state shown in FIG. 1. In this state, the capsule C on the truck 6 faces the lower opening of the enclosing member 3.

Thereafter, when the lifting cylinders 32 and the pressing cylinder 41 are simultaneously driven to move the rods 33 and the pressing rod 4 down synchronously a distance corresponding to about a half of the whole stroke so that the enclosing member 3 encloses an upper half of the capsule C as shown in FIG. 5(b).

In the air drawing step, as shown in FIG. 6(a), the truck 6 is moved away from the compacting apparatus 1 along the rails 6a. In this time, the upper portion of the capsule C is enclosed by the enclosing member 3. Accordingly, the capsule C is kept from moving in the horizontal direction and only the truck 6 is moved away with the capsule C behind. Consequently, the capsule C falls onto the bottom member 21b by its weight upon being not supported by the truck 6.

Thereafter, the lifting cylinders 32 are driven to move the rods 33 down to the full stroke and the pressing cylinder 41 is driven to move the pressing rod 4 down until the pressing header 42 comes into contact with the cover member C2 of the capsule C as shown in FIG. 6(b). The processing chamber 31, in which the capsule C is placed, is defined by the lower surface of the pressing head 42, the inner wall of the enclosing member 3 and the top surface of the rise portion 21c. In this way, the processing chamber 31 is put in an airtightly enclosed state which is shut off from the outside.

In the state that the processing chamber 31 is airtightly closed, subsequently, the vacuum pump 54 of the air drawer 5 is driven to draw the air from the processing chamber 31 through the air drawing pipe 51 to thereby put the processing chamber 31 in a vacuum state. Also, the capsule main body C1 is formed with the multitude of perforations C3. Accordingly, the air is drawn from the capsule C through the perforations C3 and the space filled with zircaloy hull and hardware is also put into a vacuum state.

After the processing chamber 31 and the capsule C are put in the vacuum state by the vacuum pump 54, the compressing and compacting step shown in FIG. 7 is performed. Specifically, as shown in FIG. 7(a), the pressing cylinder 41 is driven to move down the pressing rod 4 and the pressing header 42 to compress the capsule C into a pellet. In this way, the compacting of the capsule C is completed.

During the time when the capsule C is being compressed, a great deal of fine dusts are brought about from zircaloy hull contained in the capsule C. However, since the processing chamber 31 is kept in the vacuum state, any fire is effectively prevented from occurring due to the fine dusts of zircaloy hull.

Thereafter, as shown in FIG. 7(b), the lifting cylinders 32 and the pressing cylinder 41 are driven simultaneously to move up or contract the rods 33 and the pressing rod 4 synchronously a distance slightly larger than the height of the truck 6. Since the compressed capsule C' cleaving to the inner wall of the enclosing member 3, the capsule C' is lifted up by the enclosing member 3, thereby resulting in a gap between the bottom of the capsule C' and the base table 21 in which the truck 6 is then moved.

In the transport-out step, in the state shown in FIG. 7(b), the pressing cylinder 41 is driven to move down the pressing rod 4 while the lifting cylinders 32 are not driven. Consequently, the moving down of the pressing head 42 pushes down the compressed capsule C' to cause it to fall onto the truck 6, as shown in FIG. 8(a).

Thereafter, the lifting cylinders 32 and the pressing cylinder 41 are driven to contract the rods 33 and the pressing rod 4, as shown in FIG. 8(b), and the truck 6 carrying the compressed capsule C' is moved away from the compacting apparatus. In this way, a cycle of compacting treatment is completed.

As described above, in this compacting method, the air is drawn from the processing chamber 31 containing the capsule C to put the processing chamber 31 in the vacuum state. Accordingly, even if a large amount of fine dusts of zircaloy having extremely high flammability fly out when compressing the capsule C, any fire can be prevented because of no supply of oxygen and the capsule C can be compacted in an improved safe manner.

Further, since the maximum volume of the processing chamber 31 is not greatly larger than the volume of the capsule C, a large amount of air is not required to be drawn. Accordingly, compared to the conventional method of compressing waste in the water or compressing waste after entirely evacuating the processing room in which a compacting apparatus is installed or entirely filling the processing room with inert gas, the inventive apparatus can be made smaller or simplified. It is very advantageous in reducing the costs of facility.

Next, described will be another inventive compacting method using the inert gas supplier 7. In this compacting method, the air drawing step in FIG. 6(b) includes the inert gas supply of supplying inert gas into the processing chamber 31 in the substantially vacuum state. Specifically, when the processing chamber 31 is brought in the substantially vacuum state, the stop valve 52 is closed and the driving of the vacuum pump 54 is stopped. In this state, the stop valve 72 is opened to flow inert gas into the processing chamber 31 from the gas reservoir 74 through the gas supply pipe 71, thereby filling the processing chamber 31 with the inert gas.

The stop valve 511 is opened upon the processing chamber 31 reaching a predetermined positive pressure, i.e., more than the atmospheric pressure, with the inert gas. The supply of inert gas from the gas reservoir 74 is continued to flow the air remaining in the processing chamber 31 out. Consequently, the processing chamber 31 is replaced with the inert gas. Because the processing chamber is filled with the inert gas, accordingly, the likelihood of fire due to fine dusts of zircaloy hull can be reliably prevented in the process where the pressing cylinder 41 is driven to compress the capsule C.

In this case, the supply of inert gas to the processing chamber 31 is continued after drawing the air from the processing chamber 31. The air remaining in the processing chamber can be effectively replaced with inert gas. Accordingly, a high vacuum state is not required to be made by the drawing of air, which thus enables use of an inexpensive vacuum pump having less performance. This is advantageous in reducing the costs of facility.

Further, it may be appreciated to supply inert gas to the processing chamber 31 while drawing the air from the processing chamber 31 by the vacuum pump 54. In this manner, the processing chamber 31 can be replaced with inert gas without putting the processing chamber 31 in a vacuum state. Accordingly, an inexpensive vacuum pump having less performance can be used, which is advantageous in reducing the costs of facility.

### EXPLOITATION IN INDUSTRY

As mentioned above, a compacting method of this invention comprises the steps of: placing radioactive metal waste containing a zirconium alloy in a capsule; transporting the capsule containing the waste in a closeable processing chamber; removing oxygen from the processing chamber and the capsule after closing the processing chamber in which the capsule is placed; compressing and compacting the capsule in the processing chamber containing no oxygen; and transporting out the compacted capsule from the processing chamber. In this method, oxygen is removed from the processing chamber in which the capsule containing the radioactive metal waste including zirconium alloy has been transported. The oxygen is indispensable for fire. Accordingly, fire can be securely prevented even in the case that fine dusts having flammability are brought about from the crashed radioactive metal waste containing zirconium alloy when the capsule is compressed and compacted.

Also, this invention is directed to an apparatus for compressing and compacting a capsule containing radioactive metal waste including a zirconium alloy. The apparatus comprises a processing chamber for accommodating a capsule containing radioactive metal waste, an oxygen remover for removing oxygen from the processing chamber and the capsule, and a compressor for compressing and compacting the capsule accommodated in the processing chamber. The capsule containing radioactive metal waste including zirconium alloy is placed in the processing chamber. Thereafter, the oxygen remover removes oxygen from the processing chamber and the compressor compresses and compacts the capsule in the processing chamber. Accordingly, even in the case that fine dusts having flammability are brought about from the crashed radioactive metal waste containing zirconium alloy when the capsule is compressed and compacted, fire of fine dusts can be securely prevented because of the absence of oxygen.

## Claims

1. A method for compacting radioactive metal waste including a zirconium alloy, comprising the steps of placing radioactive metal waste containing a zirconium alloy in a capsule (C), transporting the capsule (C) containing the waste in a tightly closeable processing chamber (31), removing oxygen from the processing chamber (31) and the capsule (C) after tightly closing said processing chamber in which said capsule is placed ; compressing and compacting the capsule (C) in the processing chamber (31) containing no oxygen ; and transporting out the compacted capsule (C') from the processing chamber (31).

2. A compacting method according to claim 1, wherein the transporting step of the capsule (C) in a tightly closeable processing chamber (31) includes sub-steps of transporting the capsule (C) on a truck (6) to said processing chamber ; bringing the truck (6) to a specified position beneath said processing chamber ; having the capsule (C) seized at an upper portion thereof by seizing means (3) of the processing chamber (31) ; removing the truck (6) from the capsule (C) whose upper portion is being held by said seizing means (3).

3. A compacting method according to any one of claims 1 or 2, wherein the oxygen removing step includes removing oxygen by drawing the air containing oxygen from the processing chamber (31) and the capsule (C).

4. A compacting method according to any one of claims 1 or 2, wherein the oxygen removing step includes drawing the air containing oxygen from the processing chamber (31) and the capsule (C) ; and supplying inert gas to the processing chamber (31).

5. A compacting method according to any one of claims 1 or 2, wherein the oxygen removing step includes supplying inert gas to the processing chamber (31) while removing the air containing oxygen from the processing chamber (31) and the capsule (C).

6. The compacting method according to any one of claims 1 to 5, wherein the transporting out step includes the sub-steps of having the compacted capsule (C') lifted by said seizing means (3) of the processing chamber (31) ; bringing a truck (6) beneath the compacted capsule (C') ; and lowering the compacted capsule (C') onto the truck (6).

7. An apparatus for compacting radioactive metal waste including a zirconium alloy, the radioactive metal waste being contained in a capsule (C), the apparatus (1) comprising a tightly closeable processing chamber (31) for accomodating the capsule (C) containing the radioactive metal waste ; an oxygen remover (5) for removing oxygen from the processing chamber (31) and the capsule (C) and a compressor (4, 42) for compressing the capsule (C) accomodated in the processing chamber (31).

8. A compacting apparatus (1) according to claim 7, wherein the processing chamber (31) is defined by a base table (21) on which the capsule (C) is placed and an enclosing member (3) vertically movable with respect to the base table (21) ; the oxygen remover (5) includes a vacuum pump (54) connected with the processing chamber (31) and the compressor (4) includes a pressure member (42) movable in the processing chamber (31) to come into contact with the capsule (C).

9. A compacting apparatus according to claim 8, wherein the enclosing member (3) includes a wall for enclosing the capsule (C).

10. A compacting apparatus according to one of claims 7 to 9, further comprising an inert gas supplier (7) for supplying inert gas into the processing chamber (31).

## Patentansprüche

1. Verfahren zum Kompaktieren von radioaktivem Metallabfall, der eine Zirkoniumlegierung beinhaltet, umfassend die Verfahrensschritte des Plazierens des radioaktiven Metallabfalls, der eine Zirkoniumlegierung enthält, in einer Kapsel (C), des Transportierens der den Abfall enthaltenden Kapsel (C) in eine dicht schließbare Prozeßkammer (31), des Entfernens des Sauerstoffs aus der Prozeßkammer (31) und der Kapsel (C) nach dem dichten Verschließen der Prozeßkammer, in der die Kapsel plaziert ist, des Komprimierens und Kompaktierens der Kapsel (C) in der Prozeßkammer (31), die keinen Sauerstoff enthält, und des Heraustransportierens der kompaktierten Kapsel (C') aus der Prozeßkammer (31).

2. Kompaktierungsverfahren nach Anspruch 1, wobei der Transportschritt der Kapsel (C) in eine dicht verschließbare Prozeßkammer (31) die Unterschritte des Transportierens der Kapsel (C) auf einem Förderwagen (6) zur Prozeßkammer, des Verbringens des Förderwagens in eine bestimmte Position neben der Prozeßkammer, des Ergreifens der Kapsel (C) an einem oberen Abschnitt davon durch eine Greifeinrichtung (3) der Prozeßkammer (31), des Entfernens des Förderwagens von der Kapsel (C), deren oberer Abschnitt durch die Greifeinrichtung (3) gehalten wird, enthält.

3. Kompaktierungsverfahren nach einem der Ansprüche 1 oder 2, wobei der Sauerstoff-Entfernungs-Schritt das Entfernen des Sauerstoffs durch Absaugen der Sauerstoff beinhaltenden Luft aus der Prozeßkammer (31) und der Kapsel (C) umfaßt.

4. Kompaktierungsverfahren nach einem der Ansprüche 1 oder 2, wobei der Sauerstoff-Entfernungs-Schritt das Absaugen der Sauerstoff enthaltenden Luft aus der Prozeßkammer (31) und der Kapsel (C) und das Zuführen eines Inertgases in die Prozeßkammer (31) umfaßt.

5. Kompaktierungsverfahren nach einem der Ansprüche 1 oder 2, wobei der Sauerstoff-Entfernungs-Schritt das Zuführen eines Inertgases in die Prozeßkammer (31) während des Entfernens der Sauerstoff enthaltenden Luft aus der Prozeßkammer (31) und der Kapsel (C) umfaßt.

6. Kompaktierungsverfahren nach einem der Ansprüche 1 bis 5, wobei der Schritt des Heraustransportierens die Unterschritte umfaßt, die kompaktierte Kapsel (C') von der Greifeinrichtung (3) der Prozeßkammer (31) hochheben zu lassen, einen Förderwagen (6) neben die kompaktierte Kapsel (C') zu verbringen, und die kompaktierte Kapsel (C') auf den Förderwagen (6) abzusenken.

7. Vorrichtung zur Kompaktierung von radioaktivem Metallabfall, der eine Zirkoniumlegierung enthält, wobei der radioaktive Metallabfall in einer Kapsel (C) enthalten ist, wobei die Vorrichtung (1) umfaßt eine dicht verschließbare Prozeßkammer (31) zur Aufnahme der den radioaktiven Metallabfall enthaltenden Kapsel (C), eine Sauerstoff-Entfernungs-Einrichtung (5) zum Entfernen von Sauerstoff aus der Prozeßkammer (31) und der Kapsel (C) und einen Kompressor (4, 42) zum Komprimieren der in der Prozeßkammer (31) aufgenommenen Kapsel (C).

8. Kompaktierungsvorrichtung (1) nach Anspruch 7, wobei die Prozeßkammer (31) durch einen Basistisch (21), auf dem die Kapsel (C) plaziert ist, und ein Umhüllungsteil (3) gebildet ist, das bezüglich des Basistisches (21) vertikal bewegbar ist, wobei die Sauerstoff-Entfernungs-Einrichtung (5) eine Vakuumpumpe (54) umfaßt, die mit der Prozeßkammer (31) verbunden ist, und wobei der Kompressor (4) ein Druckteil (42) umfaßt, das in der Prozeßkammer (31) beweglich ist, um in Kontakt mit der Kapsel (C) zu gelangen.

9. Kompaktierungsvorrichtung nach Anspruch 8, wobei das Umhüllungsteil (3) eine Wand zum Umhüllen der Kapsel (C) umfaßt.

10. Kompaktierungsvorrichtung nach einem der Ansprüche 7 bis 9, weiterhin umfassend eine Inertgas-Zufuhreinrichtung (7) zum Zuführen von Inertgas in die Prozeßkammer (31).

## Revendications

1. Procédé de compactage de déchets de métaux radioactifs comprenant un alliage de zirconium, comprenant les étapes consistant à placer des déchets de métaux radioactifs contenant un alliage de zirconium dans une capsule (C), transporter la capsule (C) contenant les déchets dans une chambre de traitement pouvant être fermée de façon hermétique (31), éliminer l'oxygène de la chambre de traitement (31) et de la capsule (C) après avoir fermé de façon hermétique ladite chambre de traitement dans laquelle ladite capsule est placée, comprimer et compacter la capsule (C) dans la chambre de traitement (31) ne contenant pas d'oxygène, et transporter à l'extérieur la capsule compactée (C') depuis la chambre de traitement (31).

2. Procédé de compactage selon la revendication 1, dans lequel l'étape de transport de la capsule (C) dans une chambre de traitement pouvant être fermée de façon hermétique (31) comprend les sous-étapes consistant à transporter la capsule (C) sur un chariot (6) vers ladite chambre de traitement, amener le chariot (6) à une position spécifiée au-dessous de ladite chambre de traitement, faire saisir la capsule (C) au niveau d'une partie supérieure de celle-ci par un moyen de saisie (3) de la chambre de traitement (31), enlever le chariot (6) de la capsule (C) dont la partie supérieure est maintenue par ledit moyen de saisie (3).

3. Procédé de compactage selon l'une quelconque des revendications 1 ou 2, dans lequel l'étape d'élimination de l'oxygène comprend l'élimination de l'oxygène en aspirant l'air contenant de l'oxygène depuis la chambre de traitement (31) et la capsule (C).

4. Procédé de compactage selon l'une quelconque des revendications 1 ou 2, dans lequel l'étape d'élimination de l'oxygène comprend l'aspiration de l'air contenant de l'oxygène depuis la chambre de traitement (31) et la capsule (C), et l'alimentation de gaz inerte vers la chambre de traitement (31).

5. Procédé de compactage selon l'une quelconque des revendications 1 ou 2, dans lequel l'étape d'élimination de l'oxygène comprend l'alimentation de gaz inerte vers la chambre de traitement (31) pendant l'élimination de l'air contenant de l'oxygène depuis la chambre de traitement (31) et la capsule (C).

6. Procédé de compactage selon l'une quelconque des revendications 1 à 5, dans lequel l'étape de transport à l'extérieur comprend les sous-étapes consistant à faire soulever la capsule compactée (C') par ledit moyen de saisie (3) de la chambre de traitement (31), amener un chariot (6) au-dessous de la capsule compactée (C'), et abaisser la capsule compactée (C') jusque sur le chariot (6).

7. Dispositif destiné à compacter des déchets de métaux radioactifs comprenant un alliage de zirconium, les déchets de métaux radioactifs étant contenus dans une capsule (C), le dispositif (1) comprenant une chambre de traitement pouvant être fermée de façon hermétique (31) destinée à loger la capsule (C) contenant les déchets de métaux radioactifs, un dispositif d'élimination d'oxygène (5) destiné à éliminer l'oxygène de la chambre de traitement (31) et de la capsule (C) et un dispositif de compression (4, 42) destiné à compresser la capsule (C) logée dans la chambre de traitement (31).

8. Dispositif de compactage (1) selon la revendication 7, dans lequel la chambre de traitement (31) est définie par une table de base (21) sur laquelle la capsule (C) est placée et un élément d'emprisonnement (3) pouvant se déplacer verticalement par rapport à la table de base (21), le dispositif d'élimination d'oxygène (5) comprend une pompe à vide (54) reliée à la chambre de traitement (31) et le dispositif de compression (4) comprend un élément d'application de pression (42) pouvant se déplacer dans la chambre de traitement (31) afin de-venir en contact avec la capsule (C).

9. Dispositif de compactage selon la revendication 8, dans lequel l'élément d'emprisonnement (3) comprend une paroi destinée à emprisonner la capsule (C).

10. Dispositif de compactage selon l'une des revendications 7 à 9, comprenant en outre un dispositif de fourniture de gaz inerte (7) destiné à alimenter du gaz inerte jusque dans la chambre de traitement (31).
